# EUROPÄISCHE PATENTANMELDUNG

(11) **EP 3 351 985 A1**
(43) Veröffentlichungstag der Anmeldung: **25.07.2018**
(21) Anmeldenummer: 17178426.7
(22) Anmeldetag: 28.06.2017
(51) Int. Cl.: G02B 7/36, B22F 3/105, B23K 26/046

(54) **VERFAHREN ZUR AUTOMATISIERBAREN BZW. AUTOMATISIERTEN ERMITTLUNG DER FOKUSLAGE EINES VON EINER BELICHTUNGSEINRICHTUNG ERZEUGTEN LASERSTRAHLS**

(30) Priorität: 11.11.2016 DE 102016121649
(71) Anmelder: CL Schutzrechtsverwaltungs GmbH, 96215 Lichtenfels (DE)
(72) Erfinder: Stark, Markus, 96135 Waizenburg (DE); BECHMANN, Florian, 96215 Lichtenfels (DE); ZEULNER, Fabian, 96215 Lichtenfels (DE)
(74) Vertreter: Kohl, Fabian Hanno

(57) **Zusammenfassung**

Verfahren zur automatisierbaren bzw. automatisierten Ermittlung der Fokuslage eines von einer Belichtungseinrichtung (6) einer Vorrichtung (1) zur additiven Herstellung dreidimensionaler Objekte erzeugten Laserstrahls (2), umfassend folgende Schritte:
- Anordnen eines Substrats (10) in einer ersten Belichtungsposition (z₁), in welcher das Substrat (10) in einer bestimmten z-Achsenposition relativ zu einem Referenzpunkt (11) angeordnet ist und Belichten des Substrats (10) mit wenigstens einem Belichtungsvektor (13) in der ersten Belichtungsposition (z₁),
- Bewegen des Substrats (10) in mehrere weitere Belichtungspositionen, in welchen das Substrat (10) jeweils in einer weiteren bestimmten z-Achsenposition (Zₙ) relativ zu dem Referenzpunkt (11) angeordnet ist, und jeweiliges Belichten des Substrats (10) mit wenigstens einem Belichtungsvektor (13) in den jeweiligen weiteren Belichtungspositionen (zₙ), wobei die Belichtungsvektoren (13) in aufeinanderfolgenden Belichtungspositionen unterschiedlichen z-Achsenpositionen zugeordnet sind, wobei sich auf dem Substrat (10) ein durch die entsprechend den jeweiligen Belichtungsvektoren (13) belichteten Substratbereiche definiertes Belichtungsmuster (12) bildet,
- optisches Auswerten des Belichtungsmusters (12) durch Erfassen unterschiedlicher optisch erfassbarer Kontrastbereiche in dem Belichtungsmuster (12),
- Ermitteln der Fokuslage des Laserstrahls (2) auf Grundlage der erfassten optischen Kontrastbereiche.

## Beschreibung

Die Erfindung betrifft ein Verfahren zur automatisierbaren bzw. automatisierten Ermittlung der Fokuslage eines von einer Belichtungseinrichtung einer Vorrichtung zur additiven Herstellung dreidimensionaler Objekte erzeugten Laserstrahls, wobei die Vorrichtung eine durch eine horizontal ausgerichtete erste Maschinenachse definierte x-Achse, eine durch eine horizontal ausgerichtete zweite Maschinenachse definierte y-Achse und eine durch eine vertikal ausgerichtete dritte Maschinenachse definierte z-Achse aufweist.

Die Ermittlung der Fokuslage des von einer Belichtungseinrichtung einer additiven Vorrichtung zur additiven Herstellung dreidimensionaler Objekte erzeugten Laserstrahls im Rahmen der durchführbaren bzw. durchgeführten additiven Herstellung dreidimensionaler Objekte ist ein relevanter Vorgang. Die Ermittlung der Fokuslage des Laserstrahls und die folgende Verwendung eines fokussierten Laserstrahls zur selektiven Verfestigung der bei Durchführung eines additiven Bau- bzw. Herstellungsvorgangs selektiv zu verfestigenden Baumaterialschichten ist entscheidend für die gewünschte Verfestigung des Baumaterials und damit für die strukturellen Eigenschaften jeweiliger additiv herzustellender bzw. hergestellter dreidimensionaler Objekte.

Bis dato ist es üblich, die Fokuslage des Laserstrahls derart zu bestimmen, dass durch Belichtung eines Substrats, z. B. einem Aluminiumblech, bei unterschiedlichen z-Achsenpositionen des Substrats ein bestimmtes Belichtungsmuster auf dem Substrat erzeugt wird. Das bzw. die erzeugten Belichtungsmuster werden durch einen Techniker begutachtet. Diejenige z-Achsenposition, welche das Belichtungsmuster mit den dünnsten Belichtungsvektoren aufweist, wird als "Nulllage", in welcher der Laserstrahl fokussiert ist, bestimmt. Dieses Vorgehen ist einerseits wenig exakt und andererseits aufwändig, weil nicht automatisierbar.

Der Erfindung liegt die Aufgabe zugrunde, ein demgegenüber, insbesondere im Hinblick auf Exaktheit und Automatisierbarkeit, verbessertes Verfahren zur Ermittlung der Fokuslage eines von einer Belichtungseinrichtung einer Vorrichtung zur additiven Herstellung dreidimensionaler Objekte erzeugten Laserstrahls anzugeben.

Die Aufgabe wird durch ein Verfahren zur automatisierbaren bzw. automatisierten Ermittlung der Fokuslage eines von einer Belichtungseinrichtung einer Vorrichtung zur additiven Herstellung dreidimensionaler Objekte erzeugten Laserstrahls gemäß Anspruch 1 gelöst. Die hierzu abhängigen Ansprüche betreffen mögliche Ausführungsformen des Verfahrens.

Das hierin beschriebene Verfahren dient der automatisierbaren bzw. automatisierten Ermittlung der Fokuslage eines von einer Belichtungseinrichtung einer Vorrichtung zur additiven Herstellung dreidimensionaler Objekte ("Vorrichtung"), d. h. insbesondere einer Vorrichtung zur Durchführung selektiver Laserschmelzverfahren, kurz SLM-Verfahren, eingerichteten Vorrichtung, erzeugten Laserstrahls. Die Belichtungseinrichtung umfasst typischerweise eine Laserstrahlerzeugungseinrichtung, welche zur Erzeugung eines Laserstrahls bestimmter Strahleigenschaften, d. h. z. B. einer bestimmten Wellenlänge, eingerichtet ist, und eine auch als Scannereinrichtung zu bezeichnende bzw. zu erachtende Strahlablenkeinrichtung, welche zur gezielten Ablenkung eines von der Laserstrahlerzeugungseinrichtung erzeugten Laserstrahls auf eine (selektiv) zu belichtende Oberfläche eingerichtet ist.

Die Vorrichtung weist eine durch eine horizontal ausgerichtete erste Maschinenachse definierte x-Achse, eine durch eine horizontal ausgerichtete zweite Maschinenachse definierte y-Achse und eine durch eine vertikal ausgerichtete dritte Maschinenachse definierte z-Achse auf. Die genannten Achsen können - analog einem kartesischen Koordinatensystem - orthogonal zueinander angeordnet bzw. ausgerichtet sein. Die durch die x- und die y-Achse definierte Ebene umfasst typischerweise das Baufeld, in welchem die im Rahmen des Betriebs der Vorrichtung erfolgende selektive Belichtung und damit einhergehende selektive Verfestigung von Baumaterialschichten aus einem vermittels entsprechender Laserstrahlung verfestigbaren Baumaterial erfolgt.

Das hierin beschriebene Verfahren umfasst die im Weiteren näher erläuterten Schritte:
In einem ersten Schritt des Verfahrens erfolgt ein Anordnen eines Substrats in einer ersten Belichtungsposition, in welcher das Substrat in einer bestimmten z-Achsenposition relativ zu einem Referenzpunkt angeordnet ist und ein Belichten des Substrats mit wenigstens einem Belichtungsvektor in der ersten Belichtungsposition.

In dem automatisierbaren bzw. automatisierten ersten Schritt des Verfahrens erfolgt sonach eine Belichtung eines Substrats, d. h. z. B. eines (eloxierten) Aluminiumblechs, einer Stahlfolie oder eines Fotopapiers, mit wenigstens einem Belichtungsvektor. Ein Belichtungsvektor ist durch zwei Punkte definiert und weist somit typischerweise einen (gerad)linienförmigen Verlauf auf. Selbstverständlich ist es möglich, das Substrat mit mehreren, ein Belichtungsmuster oder einen Teil eines solchen bildenden Belichtungsvektoren zu belichten. Die Belichtung des Substrats erfolgt in einer ersten Belichtungsposition, in welcher das Substrat in einer bestimmen z-Achsenposition relativ zu einem Referenzpunkt angeordnet ist, d. h. in welchem das Substrat in einem bestimmten Abstand in z-Richtung relativ zu dem Referenzpunkt angeordnet ist. Bei dem Referenzpunkt kann es sich z. B. um den Laserstrahlausgangspunkt der Belichtungseinrichtung, d. h. den Punkt, an dem der Laserstrahl aus der Belichtungseinrichtung, d. h. typischerweise der Strahlablenkeinrichtung, in eine (inertisierbare) Prozesskammer der Vorrichtung austritt, handeln. Das Substrat ist typischerweise auf einem entlang der z-Achse beweglich gelagerten Tragelement einer zum Tragen eines additiv herzustellenden oder hergestellten dreidimensionalen Objekts eingerichteten Tragvorrichtung der Vorrichtung angeordnet oder ausgebildet.

In einem folgenden zweiten Schritt des Verfahrens erfolgt ein, insbesondere schritt- bzw. stufenweises, Bewegen des Substrats in mehrere weitere Belichtungspositionen, in welchen das Substrat jeweils in einer weiteren bestimmten z-Achsenposition relativ zu dem Referenzpunkt angeordnet ist und jeweiliges Belichten des Substrats mit wenigstens einem Belichtungsvektor in den jeweiligen weiteren Belichtungspositionen, wobei sich auf dem Substrat ein durch die entsprechend den jeweiligen Belichtungsvektoren belichteten Substratbereiche definiertes Belichtungsmuster bildet, wobei die Belichtungsvektoren in aufeinanderfolgenden Belichtungspositionen unterschiedlichen z-Achsenpositionen zugeordnet sind.

Der automatisierbare bzw. automatisierte zweite Schritt des Verfahrens kann in mehrere Teilschritte unterteilt werden. In einem jeweiligen Teilschritt wird das Substrat in einer bestimmten, von einer vorherigen Belichtungsposition verschiedenen Belichtungsposition, in welcher das Substrat in einer bestimmen (von einer vorhergehenden z-Achsenposition verschiedenen) z-Achsenposition relativ zu dem Referenzpunkt angeordnet ist, d. h. in welchem das Substrat in einem bestimmten Abstand in z-Richtung relativ zu dem Referenzpunkt angeordnet ist, angeordnet und mit wenigstens einem Belichtungsvektor belichtet. Die weiteren Belichtungspositionen können bezüglich ihrer jeweiligen z-Achsenposition z. B. um einen in einem Bereich zwischen 0,5 und 1 mm liegenden Versatz, insbesondere einen Versatz von 0,1 mm, versetzt sein; die Belichtungspositionen können in z-Richtung sonach z. B. um einen in einem Bereich zwischen 0,5 und 1 mm liegenden Versatz voneinander beabstandet sein.

Die Belichtungsvektoren, mit welchen das Substrat in jeweiligen weiteren Belichtungspositionen belichtet wird, sind typischerweise voneinander beabstandet angeordnet bzw. ausgerichtet; beispielsweise können diese parallel angeordnet bzw. ausgerichtet sein. Die Bewegung des Substrats in die jeweiligen Belichtungspositionen bzw. z-Achsenpositionen relativ zu dem Referenzpunkt erfolgt durch entsprechende Bewegung des einen Bestandteil der zum Tragen eines additiv herzustellenden oder hergestellten dreidimensionalen Objekts eingerichteten Tragvorrichtung bildenden Tragelements in jeweiligen Belichtungspositionen entsprechende z-Achsenpositionen; wie erwähnt, ist das Substrat typischerweise auf einem entlang der z-Achse beweglich gelagerten Tragelement einer zum Tragen eines additiv herzustellenden oder hergestellten dreidimensionalen Objekts eingerichteten Tragvorrichtung der Vorrichtung angeordnet oder ausgebildet.

Durch die entsprechend den jeweiligen Belichtungsvektoren belichteten Substratbereiche bildet sich auf dem Substrat ein definiertes Belichtungsmuster. Das Belichtungsmuster umfasst die Belichtungsvektoren, mit welchen das Substrat in den unterschiedlichen Belichtungspositionen belichtet wurde, bzw. ist durch die Belichtungsvektoren, mit welchen das Substrat in den unterschiedlichen Belichtungspositionen belichtet wurde, gebildet. Die Belichtungsvektoren, mit welchen das Substrat in den jeweiligen Belichtungspositionen bzw. mit welchen das Substrat in aufeinanderfolgenden bzw. unterschiedlichen Belichtungspositionen belichtet wird, sind jeweiligen aufeinanderfolgenden bzw. unterschiedlichen z-Achsenpositionen zuordenbar bzw. zugeordnet.

In einem dritten Schritt des Verfahrens erfolgt ein optisches Auswerten des in dem zweiten Schritt des Verfahrens gebildeten Belichtungsmusters durch Erfassen unterschiedlicher optisch erfassbarer Farb- bzw. Kontrastbereiche in dem Belichtungsmuster.

In dem dritten Schritt des Verfahrens erfolgt sonach eine automatisierbare bzw. automatisierte optische Untersuchung des Belichtungsmusters, im Allgemeinen des Substrats bzw. der belichteten Substratoberfläche, im Hinblick auf durch die Belichtung erzeugte Farb- bzw. Kontrastbereiche bzw. Farb- bzw. Kontrastunterschiede. Unter optisch erfassbaren Farb- bzw. Kontrastbereichen bzw. optisch erfassbaren Farb- bzw. Kontrastunterschiede sind insbesondere Bereiche in dem Belichtungsmuster zu verstehen, in welchen ein optisch erfassbarer Farbunterschied bzw. Kontrast gegeben ist. Hierbei handelt es sich typischerweise um optisch exakt erfassbare Hell-Dunkel-Bereiche, d. h. Bereiche, in welchen das Belichtungsmuster, im Allgemeinen das Substrat bzw. die belichtete Substratoberfläche, helle(re) und dunkle(re) Bereiche aufweist. Dadurch, dass die Belichtungsvektoren, mit welchen das Substrat in den jeweiligen Belichtungspositionen bzw. mit welchen das Substrat in aufeinanderfolgenden bzw. unterschiedlichen Belichtungspositionen belichtet wird, aufeinanderfolgenden bzw. unterschiedlichen z-Achsenpositionen zuordenbar bzw. zugeordnet sind, ist auch eine Zuordnung der in dem Belichtungsmuster optisch erfassten Farb- bzw. Kontrastbereiche zu jeweiligen Belichtungspositionen bzw. z-Achsenpositionen möglich.

In einem vierten Schritt des Verfahrens erfolgt ein Ermitteln der Fokuslage des Laserstrahls auf Grundlage der erfassten optischen Kontrastbereiche.

In dem automatisierbaren bzw. automatisierten vierten Schritt des Verfahrens wird die Fokuslage des Laserstrahls auf Grundlage der erfassten optischen Kontrastbereiche ermittelt. Es wird sich hierbei zunutze gemacht, dass hellere Bereiche typischerweise anzeigen, dass der Laserstrahl nicht fokussiert ist, und (im Vergleich) dunkle(re) Bereiche typischerweise anzeigen, dass der Laserstrahl fokussiert ist; je nachdem, ob der Laserstrahl defokussiert oder fokussiert auf das Substrat trifft, werden auf dem Substrat unterschiedlich farbige Farb- oder Kontrastbereiche gebildet, wobei im Vergleich helle Farb- bzw. Kontrastbereiche typischerweise anzeigen, dass der Laserstrahl in der jeweiligen Belichtungsposition defokussiert ist, und im Vergleich dunkle Farb- bzw. Kontrastbereiche typischerweise anzeigen, dass der Laserstrahl in der jeweiligen Belichtungsposition fokussiert ist. Durch die beschriebene Zuordnungsmöglichkeit der in dem Belichtungsmuster optisch erfassten Farb- bzw. Kontrastbereiche zu jeweiligen Belichtungspositionen bzw. z-Achsenpositionen, kann exakt ermittelt werden, in welcher Belichtungsposition bzw. z-Achsenposition der Laserstrahl fokussiert ist.

In einem möglichen fünften Schritt des Verfahrens kann auf Grundlage der ermittelten Fokuslage des Laserstrahls, sofern erforderlich, eine, insbesondere automatisierte, Anpassung der Anordnung und/oder Ausrichtung der Belichtungseinrichtung relativ zu einem im Rahmen der Durchführung selektiver Bauvorgänge selektiv zu belichtenden Baufeld der Vorrichtung erfolgen.

Mithin liegt ein im Hinblick auf Exaktheit und Automatisierbarkeit verbessertes Verfahren zur Ermittlung der Fokuslage eines von einer Belichtungseinrichtung einer Vorrichtung zur additiven Herstellung dreidimensionaler Objekte erzeugten Laserstrahls vor.

Die automatisierbare bzw. automatisierte Durchführung des Verfahrens wird typischerweise über eine mit den entsprechenden für die Durchführung des Verfahrens erforderlichen Funktionskomponenten der Vorrichtung kommunizierende Steuereinrichtung realisiert. Die Steuereinrichtung ist zur Erzeugung entsprechender Steuerbefehle eingerichtet.

Das Belichtungsmuster kann mit bestimmten optisch erfassbaren geometrischen Zuordnungsmerkmalen gebildet werden, wobei ein jeweiliges Zuordnungsmerkmal einer bestimmten Belichtungsposition und/oder einer bestimmten z-Achsenposition zugeordnet wird. Durch die gezielte Erzeugung entsprechender optisch erfassbarer geometrischer Zuordnungsmerkmale, wobei ein jeweiliges Zuordnungsmerkmal einer bestimmten Belichtungsposition und/oder einer bestimmten z-Achsenposition zugeordnet ist, kann eine Skala in Richtung der z-Achse (z-Skala) gebildet werden, welche die im Rahmen der beschriebenen Ermittlung der Fokuslage des Laserstrahls vorgenommene Zuordnung entsprechender Farb- bzw. Kontrastbereiche zu einer bestimmten Belichtungsposition bzw. einer bestimmten z-Achsenposition (erheblich) vereinfacht.

Ein entsprechende optisch erfassbare geometrische Zuordnungsmerkmalen aufweisendes Belichtungsmuster kann z. B. ein zacken- oder zinnenförmiges Belichtungsmuster sein. Mithin kann ein zacken- oder zinnenförmiges Belichtungsmuster gebildet werden. Dabei können z. B. die Spitzen jeweiliger Zacken oder Zinnen als bestimmte optisch erfassbare geometrische Zuordnungsmerkmale verwendet werden, welchen jeweils eine bestimmte Belichtungsposition und/oder eine bestimmte z-Achsenposition zugeordnet wird. Die Ausbildung eines entsprechend zacken- oder zinnenförmigen Belichtungsmuster kann durch die Erzeugung parallel angeordneter bzw. ausgerichteter Belichtungsvektoren, welche sich in ihrer Länge unterscheiden, sodass sich ein zacken- oder zinnenförmiges Belichtungsmuster ergibt, erfolgen. Selbstverständlich sind neben zacken- oder zinnenförmigen Belichtungsmustern auch geometrisch andersartige, d. h. z. B. in ihren Randbereichen gewölbt verlaufende, Belichtungsmuster denkbar, welche entsprechende optisch erfassbare geometrische Zuordnungsmerkmale aufweisen.

Das Belichtungsmuster kann mit einem optisch erfassbaren Zuordnungsmerkmal gebildet werden, welches Zuordnungsmerkmal einen Anfang des Belichtungsmusters definiert bzw. einem Anfang des Belichtungsmusters zugeordnet wird. Bei einem solchen Zuordnungsmerkmal kann es sich beispielsweise um eine über die Abmessungen des übrigen Belichtungsmusters wenigstens einfach, gegebenenfalls mehrfach, herausragende Linie handeln. Durch ein entsprechendes Zuordnungsmerkmal ist auf einfache Weise der Anfang des im Weiteren optisch auszuwertenden Belichtungsmusters definierbar bzw. erfassbar.

Es wurde erwähnt, dass die Belichtungsvektoren, mit welchen das Substrat in jeweiligen weiteren Belichtungspositionen belichtet wird, typischerweise voneinander beabstandet angeordnet bzw. ausgerichtet sind; beispielsweise können diese parallel angeordnet bzw. ausgerichtet sein. Mithin sind können wenigstens zwei Belichtungsvektoren, insbesondere in Richtung der x-Achse oder der y-Achse, parallel angeordnet bzw. ausgerichtet sein. Die Belichtungsvektoren können bezüglich ihrer jeweiligen x-Achsenposition und/oder y-Achsenposition z. B. um einen in einem Bereich zwischen 0,1 und 1 mm liegenden Versatz, insbesondere einen Versatz von 0,2 mm, versetzt angeordnet sein; die Belichtungsvektoren können in x- und/oder y-Richtung sonach z. B. um einen in einem Bereich zwischen Bereich zwischen 0,1 und 1 mm liegenden Versatz voneinander beabstandet sein. Grundsätzlich sollte der Abstand der Belichtungsvektoren so eng gewählt sein, dass in der zu ermittelnden bzw. ermittelten Fokuslage des Laserstrahls die Belichtungsvektoren gerade noch als einzelne Belichtungsvektoren erfassbar sind.

Zum optischen Auswerten des Belichtungsmusters durch Erfassen unterschiedlicher optischer Kontrastbereiche in dem Belichtungsmuster und zum Ermitteln der Fokuslage des Laserstrahls auf Grundlage der erfassten optischen Kontrastbereiche kann eine vorrichtungsseitig vorhandene Erfassungs- und/oder Ermittlungseinrichtung verwendet werden. Die Erfassungs- und/oder Ermittlungseinrichtung kann wenigstens ein optisches Erfassungsmittel, insbesondere eine Kamera, zum Erfassen unterschiedlicher optischer Kontrastbereiche in dem Belichtungsmuster und wenigstens ein Auswertemittel zum Ermitteln der Fokuslage des Laserstrahls auf Grundlage der erfassten optischen Kontrastbereiche umfassen. Die Erfassungs- und/oder Ermittlungseinrichtung kann mit geeigneten Erfassungs- und/oder Ermittlungsalgorithmen, insbesondere optischen Auswertealgorithmen, ausgestattet sein.

Alternativ oder ergänzend ist es jedoch auch möglich, dass zum optischen Auswerten des Belichtungsmusters durch Erfassen unterschiedlicher optischer Kontrastbereiche in dem Belichtungsmuster und zum Ermitteln der Fokuslage des Laserstrahls auf Grundlage der erfassten optischen Kontrastbereiche eine in einem anwender- bzw. benutzerseitigen mobilen Endgerät, insbesondere einem Smartphone, Tablet, Laptop, etc., vorhandene Erfassungs- und Ermittlungseinrichtung verwendet wird. Die Erfassungs- und/oder Ermittlungseinrichtung kann - analog einer vorrichtungsseitig vorhandenen Erfassungs- und/oder Ermittlungseinrichtung - wenigstens ein optisches Erfassungsmittel, insbesondere eine Kamera, zum Erfassen unterschiedlicher optischer Kontrastbereiche in dem Belichtungsmuster und wenigstens ein Auswertemittel zum Ermitteln der Fokuslage des Laserstrahls auf Grundlage der erfassten optischen Kontrastbereiche umfassen. Die Erfassungs- und/oder Ermittlungseinrichtung kann mit geeigneten Erfassungs- und/oder Ermittlungsalgorithmen, insbesondere optischen Auswertealgorithmen, ausgestattet und z. B. als so genannte "App" implementiert sein.

Neben dem Verfahren betrifft die Erfindung eine Vorrichtung zur additiven Herstellung dreidimensionaler Objekte. Die Vorrichtung umfasst neben den sonstigen erforderlichen Funktionskomponenten zur Durchführung additiver Bauvorgänge eine Belichtungseinrichtung zur Erzeugung eines auf ein Baufeld der Vorrichtung gerichteten Laserstrahls und zeichnet sich dadurch aus, dass sie zur Durchführung des beschriebenen Verfahrens eingerichtet ist. Die Vorrichtung kann hierzu eine Erfassungs- und Ermittlungseinrichtung, welche zum optischen Auswerten des Belichtungsmusters durch Erfassen unterschiedlicher optisch erfassbarer Kontrastbereiche in dem Belichtungsmuster und zum Ermitteln der Fokuslage des Laserstrahls auf Grundlage der erfassten optischen Kontrastbereiche eingerichtet ist, umfassen. Sämtliche Ausführungen im Zusammenhang mit dem Verfahren gelten in analoger Weise für die Vorrichtung.

Die Erfindung ist anhand von Ausführungsbeispielen in den Zeichnungsfiguren näher erläutert. Dabei zeigen:
- Fig. 1: eine Prinzipdarstellung einer Vorrichtung gemäß einem Ausführungsbeispiel; und
- Fig. 2: eine Prinzipdarstellung eines Belichtungsmusters gemäß einem Ausführungsbeispiel.

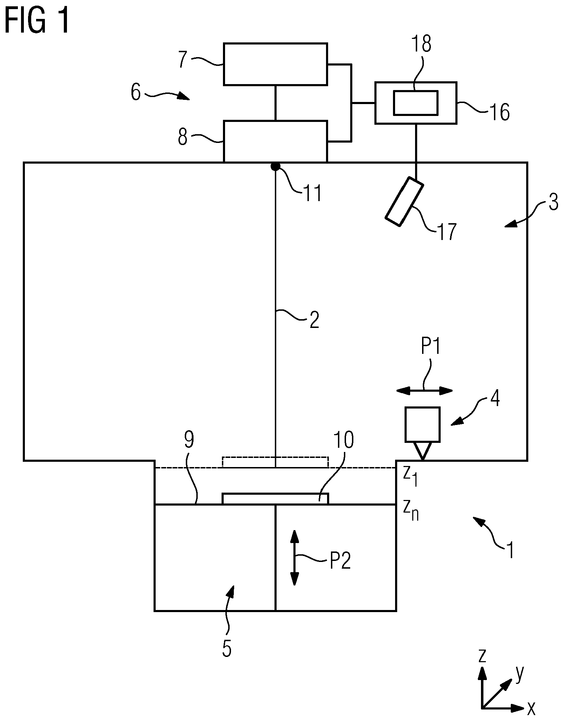

Fig. 1 zeigt eine Prinzipdarstellung einer Vorrichtung 1 gemäß einem Ausführungsbeispiel. In Fig. 1 ist nur der für die Erläuterung des nachfolgend beschriebenen Prinzips relevante Ausschnitt der Vorrichtung 1 gezeigt.

Die Vorrichtung 1, bei welcher es sich z. B. um eine SLM-Vorrichtung, d. h. um eine Vorrichtung zur Durchführung selektiver Schmelzverfahren (SLM-Verfahren) handelt, dient der additiven Herstellung dreidimensionaler Objekte, d. h. insbesondere technischer Bauteile bzw. technischer Bauteilgruppen, durch sukzessives schichtweises selektives Belichten und damit einhergehendes Verfestigen von Baumaterialschichten aus einem verfestigbaren Baumaterial, d. h. z. B. eines Metallpulvers, vermittels eines Laserstrahls 2. Die selektive Verfestigung jeweiliger zu verfestigender Baumaterialschichten erfolgt auf Grundlage von objektbezogenen Baudaten. Entsprechende Baudaten beschreiben die geometrische bzw. geometrischkonstruktive Gestalt des jeweils additiv herzustellenden Objekts. Entsprechende Baudaten können beispielsweise "geslicte" CAD-Daten des herzustellenden Objekts beinhalten.

Die Vorrichtung 1 weist eine durch eine horizontal ausgerichtete erste Maschinenachse definierte x-Achse, eine durch eine horizontal ausgerichtete zweite Maschinenachse definierte y-Achse und eine durch eine vertikal ausgerichtete dritte Maschinenachse definierte z-Achse auf. Die durch die x- und die y-Achse definierte Ebene umfasst typischerweise das Baufeld, in welchem die im Rahmen des Betriebs der Vorrichtung 1 erfolgende selektive Belichtung und damit einhergehende selektive Verfestigung von Baumaterialschichten aus einem vermittels entsprechender Laserstrahlung verfestigbaren Baumaterial erfolgt.

Die Vorrichtung 1 umfasst eine inertisierbare Prozesskammer 3, in welcher die eigentliche additive Herstellung jeweiliger Objekte erfolgt. In der Prozesskammer 3 ist wenigstens ein Teil der zur Durchführung additiver Bauvorgänge erforderlichen Funktionskomponenten, d. h. insbesondere eine, wie durch den horizontal ausgerichteten Doppelpfeil P1 angedeutet, bewegbar gelagerte Beschichtereinrichtung 4, welche zur Ausbildung zu verfestigender Baumaterialschichten in einer Bauebene eingerichtet ist, angeordnet bzw. ausgebildet.

Eine zum Tragen eines additiv herzustellenden bzw. hergestellten dreidimensionalen Objekts eingerichtete Tragvorrichtung 5 ist unterhalb der Prozesskammer 3 angeordnet. Die Tragvorrichtung 5 umfasst ein, wie durch den vertikal ausgerichteten Doppelpfeil P2 angedeutet, entlang der z-Achse beweglich gelagertes Tragelement 9. Das Tragelement 9 kann einen einen Boden eines in die Prozesskammer 3 einsetzbaren Moduls (nicht gezeigt), insbesondere eines Baumoduls, bilden bzw. mit einem Boden eines in die Prozesskammer 3 einsetzbaren Moduls, insbesondere eines Baumoduls, gekoppelt sein.

Die Vorrichtung 1 umfasst eine Belichtungseinrichtung 6. Die Belichtungseinrichtung 6 umfasst eine Laserstrahlerzeugungseinrichtung 7, welche zur Erzeugung eines Laserstrahls 2 bestimmter Strahleigenschaften, d. h. z. B. einer bestimmten Wellenlänge, eingerichtet ist, und eine auch als Scannereinrichtung zu bezeichnende bzw. zu erachtende Strahlablenkeinrichtung 8, welche zur gezielten Ablenkung des von der Laserstrahlerzeugungseinrichtung 7 erzeugten Laserstrahls 2 auf eine (selektiv) zu belichtende Oberfläche, d. h. im Rahmen der Durchführung additiver Bauvorgänge auf eine selektiv zu belichtende bzw. selektiv zu verfestigende Baumaterialschicht, eingerichtet ist.

Mit der Vorrichtung 1 lässt sich ein automatisierbares bzw. automatisiertes Verfahren zur Ermittlung der Fokuslage des von der Belichtungseinrichtung 6 erzeugten Laserstrahls 2 realisieren, welches im Folgenden näher beschrieben wird. Die automatisierbare bzw. automatisierte Durchführung des Verfahrens wird über eine mit den entsprechenden für die Durchführung des Verfahrens erforderlichen Funktionskomponenten der Vorrichtung 1 kommunizierende Steuereinrichtung (nicht gezeigt) realisiert. Die Steuereinrichtung ist zur Erzeugung entsprechender Steuerbefehle eingerichtet.

In dem automatisierbaren bzw. automatisierten ersten Schritt des Verfahrens erfolgt eine Belichtung eines Substrats 10, d. h. z. B. eines (eloxierten) Aluminiumblechs, einer Stahlfolie oder eines Fotopapiers, mit wenigstens einem Belichtungsvektor 13. Das Substrat 10 ist auf dem Tragelement 9 der Tragvorrichtung 5 der Vorrichtung 1 angeordnet. Die Belichtung des Substrats 10 erfolgt in einer ersten Belichtungsposition z₁, in welcher das Substrat 10 in einer bestimmen z-Achsenposition relativ zu einem Referenzpunkt 11 angeordnet ist, d. h. in welchem das Substrat 10 in einem bestimmten Abstand in z-Richtung relativ zu dem Referenzpunkt 11 angeordnet ist. Bei dem Referenzpunkt 11 handelt es sich beispielsweise um den Laserstrahlausgangspunkt der Belichtungseinrichtung 6, d. h. um den Punkt, an dem der Laserstrahl 2 aus der Belichtungseinrichtung 6 in die Prozesskammer 3 der Vorrichtung 1 tritt.

Der automatisierbare bzw. automatisierte zweite Schritt des Verfahrens kann in mehrere Teilschritte unterteilt werden. In einem jeweiligen Teilschritt wird das Substrat 10 in einer bestimmten, von einer vorherigen Belichtungsposition z₁ verschiedenen Belichtungsposition zₙ, in welcher das Substrat 10 in einer bestimmen (von einer vorhergehenden z-Achsenposition verschiedenen) z-Achsenposition relativ zu dem Referenzpunkt 11 angeordnet ist, d. h. in welchem das Substrat 10 in einem bestimmten Abstand in z-Richtung relativ zu dem Referenzpunkt 11 angeordnet ist, angeordnet und mit wenigstens einem Belichtungsvektor 13 belichtet. Die weiteren Belichtungspositionen zₙ sind bezüglich ihrer jeweiligen z-Achsenposition z. B. um einen in einem Bereich zwischen 0,5 und 1 mm liegenden Versatz, insbesondere einen Versatz von 0,1 mm, versetzt; die Belichtungspositionen (z₁ - zₙ) sind in z-Richtung sonach z. B. um einen in einem Bereich zwischen 0,5 und 1 mm liegenden Versatz voneinander beabstandet. In Fig. 1 ist das Substrat 10 aus Gründen der Übersichtlichkeit rein exemplarisch lediglich in zwei Belichtungspositionen z₁, zₙ, wovon eine strichliert und eine durchgezogen gezeichnet ist, dargestellt.

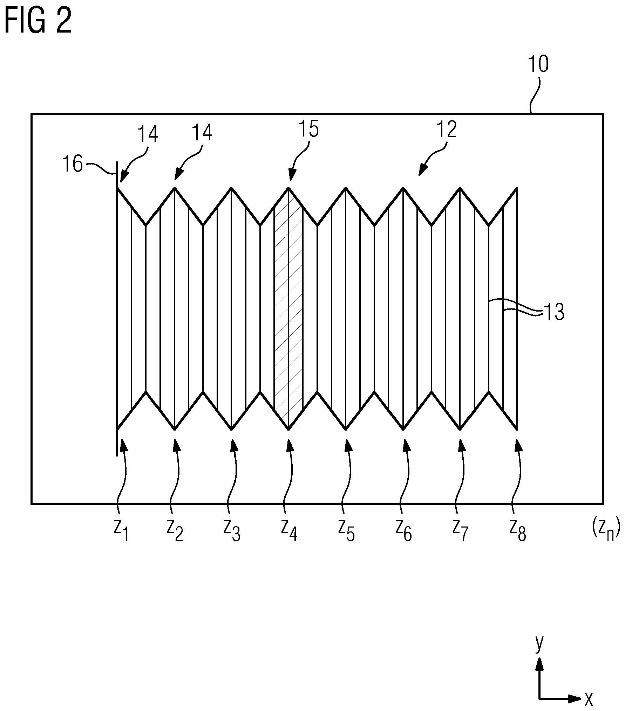

Die Belichtungsvektoren 13, mit welchen das Substrat 10 in jeweiligen weiteren Belichtungspositionen zₙ belichtet wird, sind auch in der x- und/oder y-Richtung bzw. in der durch die x- und y-Achse aufgespannten Ebene voneinander beabstandet angeordnet bzw. ausgerichtet, wie weiter unten im Zusammenhang mit der Beschreibung des in Fig. 2 gezeigten Belichtungsmusters 12 erläutert wird. Die Bewegung des Substrats 10 in die jeweiligen Belichtungspositionen zₙ bzw. z-Achsenpositionen relativ zu dem Referenzpunkt 11 erfolgt durch entsprechende Bewegung des Tragelements 9 in jeweiligen Belichtungspositionen entsprechende z-Achsenpositionen.

Durch die entsprechend den jeweiligen Belichtungsvektoren 13 belichteten Substratbereiche bildet sich auf dem Substrat 10 ein definiertes Belichtungsmuster 12 (vgl. Fig. 2). Das Belichtungsmuster 12 umfasst die Belichtungsvektoren 13, mit welchen das Substrat 10 in den unterschiedlichen Belichtungspositionen z₁ - zₙ belichtet wurde, bzw. ist durch die Belichtungsvektoren 13, mit welchen das Substrat 10 in den unterschiedlichen Belichtungspositionen z₁ - zₙ belichtet wurde, gebildet. Die Belichtungsvektoren 13, mit welchen das Substrat 10 in den jeweiligen Belichtungspositionen z₁ - zₙ bzw. mit welchen das Substrat 10 in aufeinanderfolgenden bzw. unterschiedlichen Belichtungspositionen z₁ - zₙ belichtet wird, sind jeweiligen aufeinanderfolgenden bzw. unterschiedlichen z-Achsenpositionen zuordenbar bzw. zugeordnet.

In dem automatisierbaren bzw. automatisierten dritten Schritt des Verfahrens erfolgt eine automatisierbare bzw. automatisierte optische Untersuchung des Belichtungsmusters 12 im Hinblick auf durch die Belichtung erzeugte Farb- bzw. Kontrastbereiche bzw. Farb- bzw. Kontrastunterschiede. Unter optisch erfassbaren Farb- bzw. Kontrastbereichen bzw. optisch erfassbaren Farb- bzw. Kontrastunterschiede sind Bereiche in dem Belichtungsmuster 12 zu verstehen, in welchen ein optisch erfassbarer Farbunterschied bzw. Kontrast gegeben ist. Hierbei handelt es sich typischerweise um optisch exakt erfassbare Hell-Dunkel-Bereiche, d. h. Bereiche, in welchen das Belichtungsmuster 12 bzw. das Substrat 10 bzw. die belichtete Substratoberfläche helle(re) und dunkle(re) Bereiche aufweist. Dadurch, dass die Belichtungsvektoren 13, mit welchen das Substrat 10 in den jeweiligen Belichtungspositionen z₁ - zₙ bzw. mit welchen das Substrat 10 in aufeinanderfolgenden bzw. unterschiedlichen Belichtungspositionen z₁ - zₙ belichtet wird, aufeinanderfolgenden bzw. unterschiedlichen z-Achsenpositionen zuordenbar bzw. zugeordnet sind, ist auch eine Zuordnung der in dem Belichtungsmuster 12 optisch erfassten Farb- bzw. Kontrastbereiche zu jeweiligen Belichtungspositionen z₁, zₙ bzw. z-Achsenpositionen möglich.

In dem automatisierbaren bzw. automatisierten vierten Schritt des Verfahrens wird die Fokuslage des Laserstrahls 2 auf Grundlage der erfassten optischen Kontrastbereiche ermittelt. Es wird sich hierbei zunutze gemacht, dass hellere Bereiche anzeigen, dass der Laserstrahl 2 nicht fokussiert ist, und (im Vergleich) dunkle(re) Bereiche, vgl. den schraffiert hervorgehobenen Bereich 15, anzeigen, dass der Laserstrahl 2 fokussiert ist. Durch die beschriebene Zuordnungsmöglichkeit der in dem Belichtungsmuster 12 optisch erfassten Farb- bzw. Kontrastbereiche zu jeweiligen Belichtungspositionen z₁, zₙ bzw. z-Achsenpositionen, kann exakt ermittelt werden, in welcher Belichtungsposition bzw. z-Achsenposition der Laserstrahl 2 fokussiert ist.

In einem möglichen fünften Schritt des Verfahrens erfolgt auf Grundlage der ermittelten Fokuslage des Laserstrahls 2, sofern erforderlich, eine, insbesondere automatisierte, Anpassung der Anordnung und/oder Ausrichtung der Belichtungseinrichtung 6 relativ zu einem im Rahmen der Durchführung selektiver Bauvorgänge selektiv zu belichtenden Baufeld der Vorrichtung 1.

Fig. 2 zeigt eine Prinzipdarstellung eines Belichtungsmusters 12 gemäß einem Ausführungsbeispiel in einer Aufsicht.

Anhand von Fig. 2 ist ersichtlich, dass das Belichtungsmuster 12 mit bestimmten optisch erfassbaren geometrischen Zuordnungsmerkmalen 14 gebildet werden kann, wobei ein jeweiliges Zuordnungsmerkmal 14 einer bestimmten Belichtungsposition z₁, zₙ und/oder einer bestimmten z-Achsenposition zugeordnet wird. Durch die gezielte Erzeugung entsprechender optisch erfassbarer geometrischer Zuordnungsmerkmale 14 kann eine Skala in Richtung der z-Achse (z-Skala) gebildet werden, welche die im Rahmen der beschriebenen Ermittlung der Fokuslage des Laserstrahls 2 vorgenommene Zuordnung entsprechender Farb- bzw. Kontrastbereiche zu einer bestimmten Belichtungsposition z₁, zₙ bzw. einer bestimmten z-Achsenposition (erheblich) vereinfacht.

In dem in Fig. 2 gezeigten Ausführungsbeispiel weist das Belichtungsmuster 12 eine zackenförmige Geometrie bzw. eine zackenförmige (äußere) Kontur auf. Als bestimmte optisch erfassbare geometrische Zuordnungsmerkmale 14 werden z. B. die Spitzen der Zacken verwendet, welchen jeweils eine bestimmte Belichtungsposition z₁, zₙ und/oder eine bestimmte z-Achsenposition zugeordnet wird. Die Ausbildung eines entsprechend zackenförmigen Belichtungsmusters 12 kann durch die Erzeugung parallel angeordneter bzw. ausgerichteter Belichtungsvektoren 13, welche sich in ihrer Länge unterscheiden, sodass sich ein zackenförmiges Belichtungsmuster 12 ergibt, erfolgen. Die parallel angeordneten Belichtungsvektoren 13 sind in dem Ausführungsbeispiel in Richtung der x-Achse parallel angeordnet und bezüglich ihrer jeweiligen x-Achsenposition um einen in einem Bereich zwischen 0,1 und 1 mm liegenden Versatz, insbesondere einen Versatz von 0,2 mm, versetzt angeordnet. Der Abstand der Belichtungsvektoren 13 wird so eng gewählt, dass in der zu ermittelnden bzw. ermittelten Fokuslage des Laserstrahls 2 die Belichtungsvektoren 13 gerade noch als einzelne Belichtungsvektoren 13 erfassbar sind.

Anhand von Fig. 2 ist ferner ersichtlich, dass das Belichtungsmuster 12 mit einem optisch erfassbaren Zuordnungsmerkmal 16 gebildet wird, welches Zuordnungsmerkmal 16 einen Anfang des Belichtungsmusters 12 definiert bzw. einem Anfang des Belichtungsmusters 12 zugeordnet wird. Bei dem Zuordnungsmerkmal 16 handelt es sich in dem Ausführungsbeispiel gemäß Fig. 2 um eine über die Abmessungen des übrigen Belichtungsmusters 12 optisch erfassbar herausragende Linie. Die Linie wurde durch einen im Vergleich längeren Belichtungsvektor 13 gebildet. Durch das Zuordnungsmerkmal 16 ist auf einfache Weise der Anfang des optisch auszuwertenden Belichtungsmusters 12 definierbar bzw. erfassbar.

Zum optischen Auswerten des Belichtungsmusters 12 durch Erfassen unterschiedlicher optischer Kontrastbereiche in dem Belichtungsmuster 12 und zum Ermitteln der Fokuslage des Laserstrahls 2 auf Grundlage der erfassten optischen Kontrastbereiche wird eine vorrichtungsseitig vorhandene Erfassungs- und/oder Ermittlungseinrichtung 16 verwendet. Die Erfassungs- und/oder Ermittlungseinrichtung 16 kann ein optisches Erfassungsmittel 17, insbesondere eine Kamera, zum Erfassen unterschiedlicher optischer Kontrastbereiche in dem Belichtungsmuster 12 und ein Auswertemittel 18 zum Ermitteln der Fokuslage des Laserstrahls 2 auf Grundlage der erfassten optischen Kontrastbereiche umfassen. Die Erfassungs- und/oder Ermittlungseinrichtung 16 kann mit geeigneten Erfassungs- und/oder Ermittlungsalgorithmen, insbesondere optischen Auswertealgorithmen, ausgestattet sein.

Alternativ oder ergänzend ist es jedoch auch möglich, dass zum optischen Auswerten des Belichtungsmusters 12 durch Erfassen unterschiedlicher optischer Kontrastbereiche in dem Belichtungsmuster 12 und zum Ermitteln der Fokuslage des Laserstrahls 2 auf Grundlage der erfassten optischen Kontrastbereiche eine in einem anwender- bzw. benutzerseitigen mobilen Endgerät, insbesondere einem Smartphone, Tablet, Laptop, etc., vorhandene Erfassungs- und Ermittlungseinrichtung verwendet wird. Die Erfassungs- und/oder Ermittlungseinrichtung kann - analog der vorrichtungsseitig vorhandenen Erfassungs- und/oder Ermittlungseinrichtung 16 -ein optisches Erfassungsmittel, insbesondere eine Kamera, zum Erfassen unterschiedlicher optischer Kontrastbereiche in dem Belichtungsmuster 12 und ein Auswertemittel zum Ermitteln der Fokuslage des Laserstrahls 2 auf Grundlage der erfassten optischen Kontrastbereiche umfassen. Die Erfassungs- und/oder Ermittlungseinrichtung kann mit geeigneten Erfassungs- und/oder Ermittlungsalgorithmen, insbesondere optischen Auswertealgorithmen, ausgestattet und z. B. als so genannte "App" implementiert sein.

## Patentansprüche

1. Verfahren zur automatisierbaren bzw. automatisierten Ermittlung der Fokuslage eines von einer Belichtungseinrichtung (6) einer Vorrichtung (1) zur additiven Herstellung dreidimensionaler Objekte erzeugten Laserstrahls (2), wobei die Vorrichtung (1) eine durch eine horizontal ausgerichtete erste Maschinenachse definierte x-Achse, eine durch eine horizontal ausgerichtete zweite Maschinenachse definierte y-Achse und eine durch eine vertikal ausgerichtete dritte Maschinenachse definierte z-Achse aufweist, umfassend folgende Schritte:
- Anordnen eines Substrats (10) in einer ersten Belichtungsposition (z₁), in welcher das Substrat (10) in einer bestimmten z-Achsenposition relativ zu einem Referenzpunkt (11) angeordnet ist und Belichten des Substrats (10) mit wenigstens einem Belichtungsvektor (13) in der ersten Belichtungsposition (z₁),
- Bewegen des Substrats (10) in mehrere weitere Belichtungspositionen, in welchen das Substrat (10) jeweils in einer weiteren bestimmten z-Achsenposition (zₙ) relativ zu dem Referenzpunkt (11) angeordnet ist, und jeweiliges Belichten des Substrats (10) mit wenigstens einem Belichtungsvektor (13) in den jeweiligen weiteren Belichtungspositionen (zₙ), wobei die Belichtungsvektoren (13) in aufeinanderfolgenden Belichtungspositionen unterschiedlichen z-Achsenpositionen zugeordnet sind, wobei sich auf dem Substrat (10) ein durch die entsprechend den jeweiligen Belichtungsvektoren (13) belichteten Substratbereiche definiertes Belichtungsmuster (12) bildet,
- optisches Auswerten des Belichtungsmusters (12) durch Erfassen unterschiedlicher optisch erfassbarer Kontrastbereiche in dem Belichtungsmuster (12),
- Ermitteln der Fokuslage des Laserstrahls (2) auf Grundlage der erfassten optischen Kontrastbereiche.

2. Verfahren nach Anspruch 1, **dadurch gekennzeichnet, dass** je nachdem, ob der Laserstrahl (2) defokussiert oder fokussiert auf das Substrat (10) trifft, unterschiedlich farbige Farb- oder Kontrastbereiche in dem Belichtungsmuster (12) auf dem Substrat (10) gebildet werden, wobei im Vergleich helle Farb- bzw. Kontrastbereiche in dem Belichtungsmuster (12) anzeigen, dass der Laserstrahl (2) in der jeweiligen Belichtungsposition defokussiert ist, und im Vergleich dunkle Farb- bzw. Kontrastbereiche anzeigen, dass der Laserstrahl (2) in der jeweiligen Belichtungsposition fokussiert ist.

3. Verfahren nach Anspruch 1 oder 2, **dadurch gekennzeichnet, dass** das Belichtungsmuster (12) mit bestimmten optisch erfassbaren geometrischen Zuordnungsmerkmalen (14) gebildet wird, wobei ein jeweiliges Zuordnungsmerkmal (14) einer bestimmten Belichtungsposition und/oder einer bestimmten z-Achsenposition zugeordnet wird.

4. Verfahren nach Anspruch 3, **dadurch gekennzeichnet, dass** ein zacken- oder zinnenförmiges Belichtungsmuster (12) gebildet wird, wobei die Spitzen jeweiliger Zacken oder Zinnen als bestimmte optisch erfassbare geometrischen Zuordnungsmerkmale (14) verwendet werden, welchen jeweils eine bestimmte Belichtungsposition und/oder eine bestimmte z-Achsenposition zugeordnet wird.

5. Verfahren nach Anspruch 3 oder 4, **dadurch gekennzeichnet, dass** ein optisch erfassbares Zuordnungsmerkmal (16), insbesondere in Form einer über die Abmessungen des übrigen Belichtungsmusters (12) wenigstens einfach herausragenden Linie, gebildet wird, welches Zuordnungsmerkmal einem Anfang des Belichtungsmusters (12) zugeordnet wird.

6. Verfahren nach einem der vorhergehenden Ansprüche, **dadurch gekennzeichnet, dass** die Belichtungspositionen bezüglich ihrer jeweiligen z-Achsenposition um einen in einem Bereich zwischen 0,5 und 1 mm, insbesondere 0,1 mm, liegenden Versatz versetzt sind.

7. Verfahren nach einem der vorhergehenden Ansprüche, **dadurch gekennzeichnet, dass** wenigstens zwei Belichtungsvektoren (13), insbesondere in Richtung der x-Achse oder der y-Achse, parallel angeordnet sind.

8. Verfahren nach einem der vorhergehenden Ansprüche, **dadurch gekennzeichnet, dass** die Belichtungsvektoren (13) bezüglich ihrer jeweiligen x-Achsenposition und/oder y-Achsenposition um einen in einem Bereich zwischen 0,1 und 1 mm, insbesondere 0,2 mm, liegenden Versatz versetzt angeordnet sind.

9. Verfahren nach einem der vorhergehenden Ansprüche, **dadurch gekennzeichnet, dass** auf Grundlage der ermittelten Fokuslage des Laserstrahls (2) eine, insbesondere automatisierte, Anpassung der Anordnung der Belichtungseinrichtung (6) relativ zu einem selektiv zu belichtenden Baufeld der Vorrichtung (1) erfolgt.

10. Verfahren nach einem der vorhergehenden Ansprüche, **dadurch gekennzeichnet, dass** das Substrat (10) auf einem entlang der z-Achse beweglich gelagerten Tragelement (9) einer zum Tragen eines additiv herzustellenden oder hergestellten dreidimensionalen Objekts eingerichteten Tragvorrichtung (5) der Vorrichtung (1) angeordnet oder ausgebildet ist.

11. Verfahren nach einem der vorhergehenden Ansprüche, **dadurch gekennzeichnet, dass** zum optischen Auswerten des Belichtungsmusters (12) durch Erfassen unterschiedlicher optischer Kontrastbereiche in dem Belichtungsmuster (12) und zum Ermitteln der Fokuslage des Laserstrahls (2) auf Grundlage der erfassten optischen Kontrastbereiche eine vorrichtungsseitig vorhandene Erfassungs- und Ermittlungseinrichtung (16) verwendet wird.

12. Verfahren nach einem der vorhergehenden Ansprüche, **dadurch gekennzeichnet, dass** zum optischen Auswerten des Belichtungsmusters (12) durch Erfassen unterschiedlicher optischer Kontrastbereiche in dem Belichtungsmuster (12) und zum Ermitteln der Fokuslage des Laserstrahls (2) auf Grundlage der erfassten optischen Kontrastbereiche eine in einem mobilen Endgerät, insbesondere einem Smartphone oder einem Tablet, vorhandene Erfassungs- und Ermittlungseinrichtung verwendet wird.

13. Vorrichtung (1) zur additiven Herstellung dreidimensionaler Objekte, umfassend eine Belichtungseinrichtung zur Erzeugung eines auf ein Baufeld der Vorrichtung (1) gerichteten Laserstrahls (2), **dadurch gekennzeichnet, dass** die Vorrichtung (1) zur Durchführung des Verfahrens nach einem der vorhergehenden Ansprüche eingerichtet ist.

14. Vorrichtung nach Anspruch 13, **gekennzeichnet durch** eine Erfassungs- und Ermittlungseinrichtung (16), welche zum optischen Auswerten des Belichtungsmusters (12) durch Erfassen unterschiedlicher optisch erfassbarer Kontrastbereiche in dem Belichtungsmuster (12) und zum Ermitteln der Fokuslage des Laserstrahls (2) auf Grundlage der erfassten optischen Kontrastbereiche eingerichtet ist.
